# EUROPEAN PATENT APPLICATION

(11) **EP 1 309 219 A1**
(43) Date of publication of application: **07.05.2003**
(21) Application number: 01402824.5
(22) Date of filing: 31.10.2001
(51) Int. Cl.: H04Q 11/04

(54) **System, network, nodes and method for setting up a connection via parallel set-up messages**

(71) Applicant: ALCATEL, 75008 Paris (FR)
(72) Inventor: van den Bosch, Sven Jozef Jeanne, 9080 Lochristi (BE); van Hoey, Gert, 9050 Gentbrugge (BE); de la Vallee-Poussin, Paloma, 2630 Aartselaar (BE); DeGrande, Nathalie Maria Cornelia, 9290 Overmere (BE)
(74) Representative: Narmon, Gisèle Marie Thérèse

(57) **Abstract**

In systems for setting up connections in networks from ingress nodes to egress nodes by exchanging set-up messages comprising ingress codes, egress codes and quality codes (delays, hopcounts, packetlosses, available bandwidths), much time is lost when failures occur during the setting up. By introducing set-up generators for generating several set-up messages independently from any receival of response messages and defining the connection to be set up via different paths (via different intermediate nodes), in parallel, several paths are being (tried to) set up for the same connection. By introducing a comparator for comparing quality codes and a selector for selecting a path in dependence of a comparison result, the best path can be selected, resulting in a very efficient network. Said ingress/egress nodes are ingress/egress Label Switched Routers situated in leaf areas coupled via backbone areas, with said intermediate nodes being head-end/tail-end Area Border Routers.

## Description

The invention relates to a system for setting up a connection in a network from an ingress node to an egress node, which system comprises a set-up sender for sending set-up messages comprising at least an ingress code, an egress code and a quality code and defining said connection to be set up and which system comprises a set-up receiver for receiving set-up messages, which system further comprises a response sender for sending response messages defining responses to said set-up messages and which system further comprises a response receiver for receiving response messages.

Such a system is generally known. For example US 6,115,753 discloses a connection being set up in the Private Network Network Interface domain or PNNI domain. A first terminal which coupled to a source node issues a set up message to this source node, which uses the PNNI topology database in order to calculate a path towards the destination node. In the PNNI configuration this path is built by calculating a Designated Transit List or DTL, which is passed from node to node. In the PNNI signalling procedure this set up message is followed by a connect message sent back from the destination node towards the source node.

So, the source node will comprise at least the set-up sender for sending set-up messages comprising at least an ingress code, an egress code and a quality code and defining said connection to be set up and the response receiver for receiving response messages, and the destination node will comprise at least the set-up receiver for receiving set-up messages and the response sender for sending response messages defining responses to said set-up messages. Generally, each node can be an ingress node as well as an egress node (due to each node usually being used for several different connections) and then will comprise each sender and each receiver.

The system disclosed in US 6,115,753 is adapted for, in case of a failure, rerouting a connection already set up, whereby possibly a number of alternative routes may be kept in memory on forehand for those connections that need service restoration in a fast way.

The known system is disadvantageous, inter alia, due to the setting up of a connection via a first path sometimes failing, in which case said connection, after said failing has been detected, is to be set up via a second path. Even when alternative routes are kept in memory on forehand, a lot of time is lost.

It is an object of the invention, inter alia, of providing a system as defined in the preamble which can set up a connection in a network without losing too much time in case of a failure during the set up.

The system according to the invention is characterised in that said system comprises a set-up generator coupled to said set-up sender for generating at least a first set-up message and a second set-up message independently from any receival of response messages and defining said connection to be set up from said ingress node to said egress node, with said first set-up message using a first path and said second set-up message using a second path different from said first path, which system further comprises a comparator coupled to said set-up receiver for comparing quality codes and which system further comprises a selector coupled to said comparator for selecting a path in dependence of a comparison result, which response sender is coupled to said selector for sending said response messages in dependence of said selecting.

By providing the system according to the invention with the set-up generator coupled to said set-up sender for generating at least the first set-up message and the second set-up message independently from any receival of response messages and both defining said connection to be set up from said ingress node to said egress node, with said first set-up message using (defining) a first path and said second set-up message using (defining) a second path different from said first path, in parallel, two or more than two paths are being set up for the same connection (or, at least, it is tried to set up said paths). By providing the system according to the invention with the comparator coupled to said set-up receiver for comparing quality codes and with the selector coupled to said comparator for selecting a path in dependence of a comparison result, the best path can be selected, resulting in a very efficient network. In response to said selecting, the response sender coupled to said selector sends said response messages in dependence of said selecting, to inform the ingress node.

The invention is based on the insight, inter alia, that when going for a target, the chances of getting it increase with the number of independent approaches, especially in case of said approaches using different routes for coming closer.

The invention solves the problem, inter alia, of providing a system for setting up a connection in a network which loses less time in case of a failure during the set up.

It should be noted that where US 6,115,753 is directed to, in case of a failure, rerouting a connection already set up, this invention is not limited to this rerouting but is directed to the setting up of a connection in general.

Said ingress codes for example defines (addresses of) ingress nodes, said egress codes for example define (addresses of) egress nodes, and said quality codes for example correspond with delays, and/or hopcounts, and/or packetlosses, and/or available bandwidths etc.

It should further be noted that, even in case of no failure taking place, the system according to the invention is much more efficient, due to now being able to select the best solution (by taking into account said quality codes) in case of more than one solution being available.

A first embodiment of the system according to the invention is characterised in that said first path connects said ingress node with said egress node via a first intermediate node, with said second path connecting said ingress node with said egress node via a second intermediate node different from said first intermediate node.

By letting each path use at least one intermediate node not used by an other path, said paths are not just different logically but are also different physically.

A second embodiment of the system according to the invention is characterised in that said ingress node is an ingress Label Switched Router situated in a first area, with said egress node being an egress Label Switched Router situated in a second area, and with a third area being situated between said first area and said second area, and with said intermediate nodes being head-end Area Border Routers between said first area and said third area and/or tail-end Area Border Routers between said second area and said third area.

Especially, but not exclusively, in this environment comprising several areas and Label Switched Routers and Area Border Routers, the system according to the invention will be extremely advantegous. Said first and second area for example correspond with leaf areas, and said third area for example correponds with a backbone area.

The invention further relates to a network comprising ingress nodes, intermediate nodes and egress nodes for setting up a connection in said network from an ingress node to an egress node, with at least a first node comprising a set-up sender for sending set-up messages comprising at least an ingress code, an egress code and a quality code and defining said connection to be set up and with at least a second node comprising a set-up receiver for receiving set-up messages, with said second node further comprising a response sender for sending response messages defining responses to said set-up messages and with said first node further comprising a response receiver for receiving response messages.

The network according to the invention is characterised in that said first node corresponds with a broadcasting node and further comprises a set-up generator coupled to said set-up sender for generating at least a first set-up message and a second set-up message independently from any receival of response messages and defining said connection to be set up from said ingress node to said egress node, with said first set-up message using a first path and said second set-up message using a second path different from said first path, with said second node corresponding with a deciding node and further comprising a comparator coupled to said set-up receiver for comparing quality codes and with said second node further comprising a selector coupled to said comparator for selecting a path in dependence of a comparison result, which response sender is coupled to said selector for sending said response messages in dependence of said selecting.

A first embodiment of the network according to the invention is characterised in that said first path connects said ingress node with said egress node via a first intermediate node, with said second path connecting said ingress node with said egress node via a second intermediate node different from said first intermediate node, with at least one of said ingress node, egress node, first intermediate node and second intermediate node comprising at least one broadcasting node and with at least one of said ingress node, egress node, first intermediate node and second intermediate node comprising at least one deciding node.

Further embodiments of the network according to the invention correspond with (parts of the) embodiments of the system according to the invention.

The invention yet further relates to a broadcasting node for use in a network comprising ingress nodes, intermediate nodes and egress nodes for setting up a connection in said network from an ingress node to an egress node, with at least a first node comprising a set-up sender for sending set-up messages comprising at least an ingress code, an egress code and a quality code and defining said connection to be set up and with said first node further comprising a response receiver for receiving response messages.

The broadcasting node is characterised in that said first node corresponds with said broadcasting node and further comprises a set-up generator coupled to said set-up sender for generating at least a first set-up message and a second set-up message independently from any receival of response messages and defining said connection to be set up from said ingress node to said egress node, with said first set-up message using a first path and said second set-up message using a second path different from said first path.

A first embodiment of the broadcasting node according to the invention is characterised in that said first path connects said ingress node with said egress node via a first intermediate node, with said second path connecting said ingress node with said egress node via a second intermediate node different from said first intermediate node, with at least one of said ingress node, egress node, first intermediate node and second intermediate node comprising at least one broadcasting node, with said ingress node being an ingress Label Switched Router situated in a first area, with said egress node being an egress Label Switched Router situated in a second area, and with a third area being situated between said first area and said second area, and with said intermediate nodes being head-end Area Border Routers between said first area and said third area and/or tail-end Area Border Routers between said second area and said third area.

Further embodiments of the broadcasting node according to the invention correspond with (parts of the) embodiments of the system according to the invention.

The invention also relates to a deciding node for use in a network comprising ingress nodes, intermediate nodes and egress nodes for setting up a connection in said network from an ingress node to an egress node, with at least a second node comprising a set-up receiver for receiving set-up messages comprising at least an ingress code, an egress code and a quality code and defining said connection to be set up, with said second node further comprising a response sender for sending response messages defining responses to said set-up messages.

The deciding node according to the invention is characterised in that said second node corresponds with a deciding node and further comprises a comparator coupled to said set-up receiver for comparing quality codes originating from at least a first set-up message defining a first path and a second set-up message defining a second path different from said first path, with said second node further comprising a selector coupled to said comparator for selecting a path in dependence of a comparison result, which response sender is coupled to said selector for sending said response messages in dependence of said selecting.

A first embodiment of the deciding node according to the invention is characterised in that said first path connects said ingress node with said egress node via a first intermediate node, with said second path connecting said ingress node with said egress node via a second intermediate node different from said first intermediate node, with at least one of said ingress node, egress node, first intermediate node and second intermediate node comprising at least one deciding node, with said ingress node being an ingress Label Switched Router situated in a first area, with said egress node being an egress Label Switched Router situated in a second area, and with a third area being situated between said first area and said second area, and with said intermediate nodes being head-end Area Border Routers between said first area and said third area and/or tail-end Area Border Routers between said second area and said third area.

Further embodiments of the deciding node according to the invention correspond with (parts of the) embodiments of the system according to the invention.

The invention yet also relates to a method for setting up a connection from an ingress node to an egress node in a network comprising ingress nodes, intermediate nodes and egress nodes, which method comprises a first step of at a first node sending set-up messages comprising at least an ingress code, an egress code and a quality code and defining said connection to be set up and a second step of at a second node receiving set-up messages and a third step of at said second node sending response messages defining responses to said set-up messages and a fourth step of at said first node receiving response messages.

The method according to the invention is characterised in that said method comprises a fifth step of at said first node which corresponds with a broadcasting node generating at least a first set-up message and a second set-up message independently from any receival of response messages and defining said connection to be set up from said ingress node to said egress node, with said first set-up message using a first path and said second set-up message using a second path different from said first path and a sixth step of at said second node which corresponds with a deciding node comparing quality codes and a seventh step of at said second node selecting a path in dependence of a comparison result, with said sending of said response messages being dependent upon said selecting.

Embodiments of the method according to the invention correspond with (parts of the) embodiments of the system according to the invention.

US 6,115,753 discloses a connection being set up in the Private Network Network Interface domain or PNNI domain, whereby in case of a failure, the connection already set up is rerouted. US 6,130,889 discloses the determining and maintaining hop-count for switched networks. US 6,246,669 discloses a method and system for optimizing connection set-up operations in a high speed digital network. US 6,272,111 discloses a routing system, and US 6,275,494 discloses a packet switching system, packet switching network and packet switching method. None of these references discloses the invention. All references including references cited with respect to these references are considered to be incorporated in this patent application.

The invention will be further explained more detailledly at the hand of an example shown in the drawings, whereby
figure 1 discloses a system according to the invention comprising a broadcasting node according to the invention and/or a deciding node according to the invention, and
figure 2 discloses a network according to the invention comprising the system according to the invention and/or nodes according to the invention.

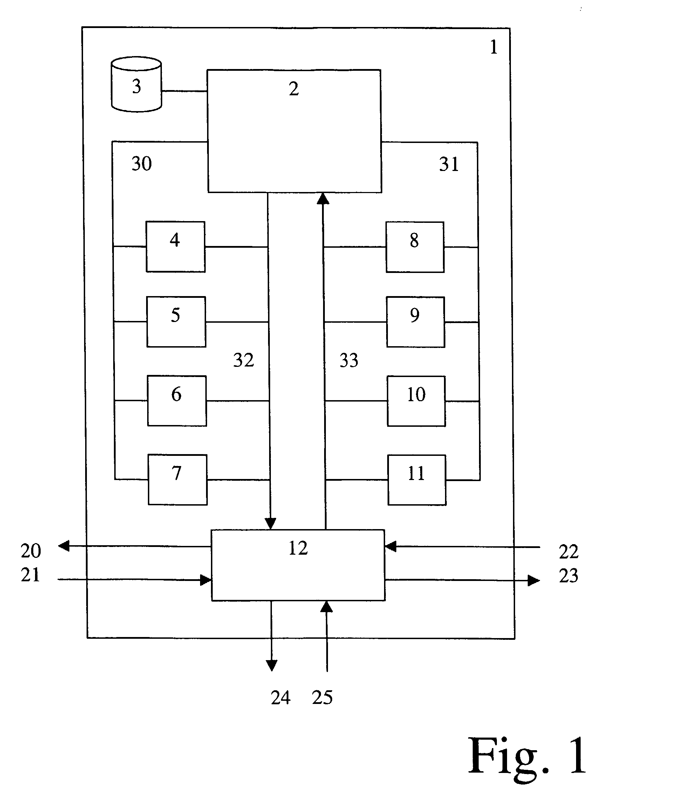

Figure 1 discloses a system 1 according to the invention comprising a processor 2 coupled to a memory 3 and via a control bus 30 as well as via a sending bus 32 to a set-up generator 4 and to a unit 5 and to a set-up sender 6 and to a response sender 7, which sending bus 32 is further coupled to a switch 12. Processor 2 is further coupled via a control bus 31 as well as via a receiving bus 33 to response receiver 11 and to set-up receiver 10 and to comparator 9 and to selector 8, which receiving bus 33 is further coupled to switch 12. Switch 12 is further coupled to couplings 20,21 and to couplings 22,23 and to couplings 24,25.

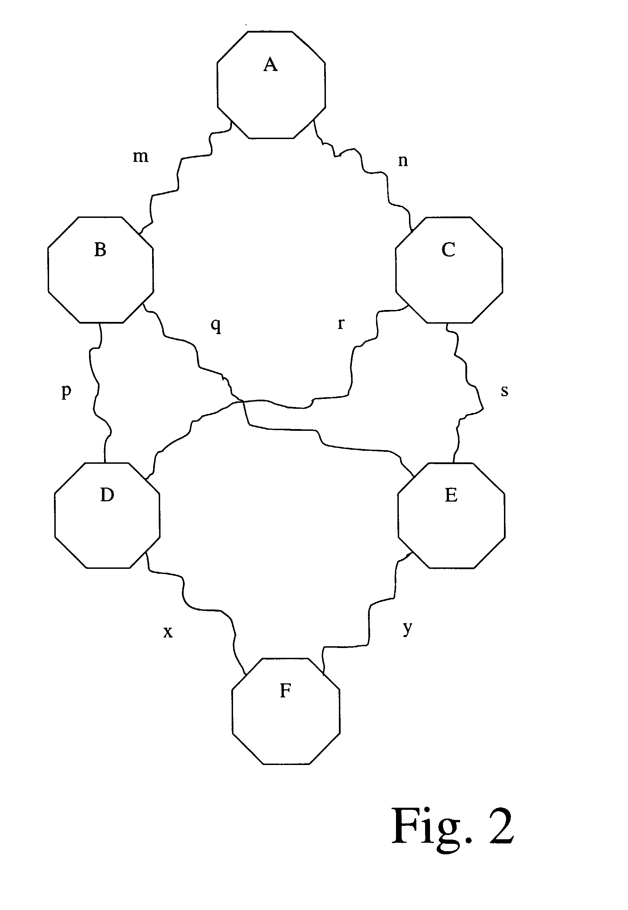

Figure 2 discloses a network according to the invention comprising an ingress node A (broadcasting node) coupled via coupling m to an intermediate node B (broadcasting node) and via a coupling n to an intermediate node C (broadcasting node). Node B is further coupled via a coupling p to an intermediate node D (deciding node) and via a coupling q to an intermediate node E (deciding node). Node C is further coupled via a coupling r to said intermediate node D (deciding node) and via a coupling s to said intermediate node E (deciding node). Node D is further coupled via a coupling x to an egress node F (deciding node) and node E is further coupled via a coupling y to said egress node F (deciding node).

Coupling m for example comprises couplings A20,A21 and couplings B24,B25. Coupling n for example comprises couplings A22,A23 and couplings C24,C25. Coupling p for example comprises couplings B20,B21 and couplings D20,D21. Coupling q for example comprises couplings B22,B23 and couplings E20,E21. Coupling r for example comprises couplings C20,C21 and couplings D22,D23. Coupling s for example comprises couplings C22,C23 and couplings E22,E23. Coupling x for example comprises couplings D24,D25 and couplings F20,F21. Coupling y for example comprises couplings E24,E25 and couplings F22,F23.

The system according to the invention and the network according to the invention comprising the nodes according to the invention function as follows.

According to a first embodiment, a traffic signal arrives at node A and node A detects that this traffic signal is to be sent to node F, or node A is informed that said traffic signal will arrive and after arrival is to be sent to node F.

According to a prior art solution, processor A2 consults memory A3, and finds out that said traffic signal, when needing to be transported from node A to node F, should follow a preferred path via node B, and in case of a failure, should follow an alternative path via node C. In other words, the preferred path uses coupling m, and after a failure has been reported, the alternative path should be used via coupling n. In node B, processor B2 consults memory B3, and finds out that said traffic signal, when needing to be transported from node A to node F, should follow a preferred path via node D, and in case of a failure, should follow an alternative path via node E. In other words, the preferred path uses coupling p, and after a failure has been reported, the alternative path should be used via coupling q, etc. Should a failure be reported via node B, in node C processor C2 consults memory C3, and finds out that said traffic signal, when needing to be transported from node A to node F, should follow a preferred path via node D, and in case of a failure, should follow an alternative path via node E. In other words, the preferred path uses coupling r, and after a failure has been reported, the alternative path should be used via coupling s, etc. It will be clear that, as soon as a failure is reported, this prior art solution will lose time, which is disadvantageous.

According to the invention, in node A, processor A2 consults memory A3 and controls via control bus A30 set-up generator A4 and set-up sender A6 in such a way that two set-up messages are generated by set-up generator A4, which first and second set-up message are sent by set-up sender A6 via sending bus A32 to switch A12. The first set-up message comprises an ingress code A, an egress code F and a quality code like for example an available bandwidth and comprises for example an intermediate code B, and is sent from switch A12 via coupling A20 to node B. The second set-up message comprises an ingress code A, an egress code F and a quality code like for example an available bandwidth and comprises for example an intermediate code C, and is sent from switch A12 via coupling A23 to node C.

In node B, said first set-up message arrives via coupling B25 at switch B12, which supplies said first set-up message via receiving bus B33 to set-up receiver B10, which informs processor B2 via control bus B31. Processor B2 consults memory B3 and controls via control bus B30 set-up generator B4 and set-up sender B6 in such a way that two set-up messages are generated by set-up generator B4 (by either copying (parts of) said first set-up message and then possibly amending codes and/or deleting codes and/or adding codes or by generating new set-up messages thereby using info from the old set-up message), which third and fourth set-up message are sent by set-up sender B6 via sending bus B32 to switch B12. The third set-up message comprises an ingress code A, an egress code F and a quality code like for example an available bandwidth and comprises for example an intermediate code D, and is sent from switch B12 via coupling B20 to node D. The fourth set-up message comprises an ingress code A, an egress code F and a quality code like for example an available bandwidth and comprises for example an intermediate code E, and is sent from switch B12 via coupling B23 to node E.

At about the same time, in node C, said second set-up message arrives via coupling C25 at switch C12, which supplies said second set-up message via receiving bus C33 to set-up receiver C10, which informs processor C2 via control bus C31. Processor C2 consults memory C3 and controls via control bus C30 set-up generator C4 and set-up sender C6 in such a way that two set-up messages are generated by set-up generator C4 (by either copying (parts of) said second set-up message and then possibly amending codes and/or deleting codes and/or adding codes or by generating new set-up messages thereby using info from the old set-up message), which fifth and sixth set-up message are sent by set-up sender C6 via sending bus C32 to switch C12. The fifth set-up message comprises an ingress code A, an egress code F and a quality code like for example an available bandwidth and comprises for example an intermediate code D, and is sent from switch C12 via coupling C20 to node D. The sixth set-up message comprises an ingress code A, an egress code F and a quality code like for example an available bandwidth and comprises for example an intermediate code E, and is sent from switch C12 via coupling C23 to node E.

In node D, said third set-up message arrives via coupling D21 at switch D12, which supplies said third set-up message via receiving bus D33 to set-up receiver D10, which informs processor D2 via control bus D31, and said fifth set-up message arrives via coupling D22 at switch D12, which supplies said fifth set-up message via receiving bus D33 to set-up receiver D10, which informs processor D2 via control bus D31. Processor D2 controls comparator D9 in such a way that both said quality codes are compared with each other. In case of said quality codes corresponding with the available bandwidths via couplings p and r (and/or via nodes B and C), with for example the available bandwidth via coupling p being larger than the available bandwidth via coupling r, a comparison result is supplied, under control of and/or via processor D2, via control bus D31 or via receiving bus D33 to selector D8, which selects the third set-up message to be the one to be continued and the which selects the fifth set-up message to be the one to be cut off. In response, processor D2 consults memory D3 and controls via control bus D30 set-up generator D4 and set-up sender D6 and response sender D7 in such a way that a seventh set-up message is generated by set-up generator D4 (by either copying (parts of) said third set-up message and then possibly amending codes and/or deleting codes and/or adding codes or by generating a new set-up message thereby using info from the old set-up message), which seventh set-up message is sent by set-up sender D6 via sending bus D32 to switch D12. The seventh set-up message comprises an ingress code A, an egress code F and an amended quality code like for example an available bandwidth, and is sent from switch D12 via coupling D24 to node F. Further, processor D2 controls response sender D7 in such a way that a response message is sent via sending bus D32 and switch D12 and coupling D23 to node C. This response message comprises for example an ingress code A and/or an egress code F and/or a response code defining for example the kind of response and/or an intermediate code C and/or an indication code defining this response message to be a response to said fifth set-up message etc.

In node C, said response message arrives via coupling C21 at switch C12, which supplies said response message via receiving bus C33 to response receiver C11, which informs processor C2 via control bus C31. Processor C2 consults memory C3 and finds out that a response message in response to said sixth set-up message has not yet been received, and waits for that to happen.

In node E, said fourth set-up message arrives via coupling E21 at switch E12, which supplies said fourth set-up message via receiving bus E33 to set-up receiver E10, which informs processor E2 via control bus E31, and said sixth set-up message arrives via coupling E22 at switch E12, which supplies said sixth set-up message via receiving bus E33 to set-up receiver E10, which informs processor E2 via control bus E31. Processor E2 controls comparator E9 in such a way that both said quality codes are compared with each other. In case of said quality codes corresponding with the available bandwidths via couplings q and s (and/or via nodes B and C), with for example the available bandwidth via coupling s being larger than the available bandwidth via coupling q, a comparison result is supplied, under control of and/or via processor E2, via control bus E31 or via receiving bus E33 to selector E8, which selects the sixth set-up message to be the one to be continued and the which selects the fourth set-up message to be the one to be cut off. In response, processor E2 consults memory E3 and controls via control bus E30 set-up generator E4 and set-up sender E6 and response sender E7 in such a way that an eighth set-up message is generated by set-up generator E4 (by either copying (parts of) said sixth set-up message and then possibly amending codes and/or deleting codes and/or adding codes or by generating a new set-up message thereby using info from the old set-up message), which eighth set-up message is sent by set-up sender E6 via sending bus E32 to switch E12. The eighth set-up message comprises an ingress code A, an egress code F and an amended quality code like for example an available bandwidth, and is sent from switch E12 via coupling E24 to node F. Further, processor E2 controls response sender E7 in such a way that a response message is sent via sending bus E32 and switch E12 and coupling E20 to node B. This response message comprises for example an ingress code A and/or an egress code F and/or a response code defining for example the kind of response and/or an intermediate code B and/or an indication code defining this response message to be a response to said fourth set-up message etc.

In node B, said response message arrives via coupling B22 at switch B12, which supplies said response message via receiving bus B33 to response receiver B11, which informs processor B2 via control bus B31. Processor B2 consults memory B3 and finds out that a response message in response to said third set-up message has not yet been received, and waits for that to happen.

In node F, said seventh set-up message arrives via coupling F21 at switch F12, which supplies said seventh set-up message via receiving bus F33 to set-up receiver F10, which informs processor F2 via control bus F31, and said eighth set-up message arrives via coupling F22 at switch F12, which supplies said eighth set-up message via receiving bus F33 to set-up receiver F10, which informs processor F2 via control bus F31. Processor F2 controls comparator F9 in such a way that both said quality codes are compared with each other. In case of said quality codes corresponding with the available bandwidths via couplings x and y (and/or via nodes D and E), with for example the available bandwidth via coupling x being larger than the available bandwidth via coupling y, a comparison result is supplied, under control of and/or via processor F2, via control bus F31 or via receiving bus F33 to selector F8, which selects the seventh set-up message to be the one to be chosen for setting up the connection and the which selects the eighth set-up message to be the one to be cut off. In response, processor F2 consults memory F3 and controls via control bus F30 response sender F7 in such a way that two response messages are sent via sending bus F32 to switch F12: one response message comprises for example an ingress code A and/or an egress code F and/or a response code defining for example the kind of response and/or an intermediate code D and/or an intermediate code B and/or an indication code defining this response message to be a response to said seventh set-up message etc. and is sent via coupling F20 to node D. The other response message comprises for example an ingress code A and/or an egress code F and/or a response code defining for example the kind of response and/or an intermediate code E and/or an intermediate code C and/or an indication code defining this response message to be a response to said eighth set-up message etc. and is sent via coupling F23 to node E.

In node E, said other response message arrives via coupling E25 at switch E12, which supplies said response message via receiving bus E33 to response receiver E11, which informs processor E2 via control bus E31. Processor E2 possibly consults memory E3 and finds out that this other response message is a response to said eighth/sixth set-up message, and controls response sender E7 in such a way that said other response message is sent via coupling E23 to node C. This other response message comprises for example an ingress code A and/or an egress code F and/or a response code defining for example the kind of response and/or an intermediate code C and/or an indication code defining this response message to be a response to said eighth/sixth set-up message etc. In node C, said other response message arrives via coupling C22 at switch C12, which supplies said other response message via receiving bus C33 to response receiver C11, which informs processor C2 via control bus C31. Processor C2 consults memory C3 and finds out that now both response messages in response to said fifth and sixth set-up messages have been received, and controls response sender C7 in such a way that a response message is sent via coupling C24 to node A. This response message comprises for example an ingress code A and/or an egress code F and/or a response code defining for example the kind of response and/or an indication code defining this response message to be a response to said fifth and sixth set-up messages and/or to said second set-up message etc. Node A now knows that coupling n is not to be used.

At about the same time, in node D, said one response message arrives via coupling D25 at switch D12, which supplies said response message via receiving bus D33 to response receiver D11, which informs processor D2 via control bus D31. Processor D2 possibly consults memory D3 and finds out that this one response message is a response to said seventh/third set-up message, and controls response sender D7 in such a way that said one response message is sent via coupling D20 to node B. This one response message comprises for example an ingress code A and/or an egress code F and/or a response code defining for example the kind of response and/or an intermediate code B and/or an indication code defining this response message to be a response to said seventh/third set-up message etc. In node B, said one response message arrives via coupling B21 at switch B12, which supplies said one response message via receiving bus B33 to response receiver B11, which informs processor B2 via control bus B31. Processor B2 consults memory B3 and finds out that now both response messages in response to said third and fourth set-up messages have been received, and controls response sender B7 in such a way that a response message is sent via coupling B24 to node A. This response message comprises for example an ingress code A and/or an egress code F and/or a response code defining for example the kind of response and/or an indication code defining this response message to be a response to said third and fourth set-up messages and/or to said first set-up message etc. Node A now knows, at about the same time at which node A has found out that coupling n is not to be used, that coupling m is to be used, and without having lost too much time, due to the parallel interrogation !

So, in view of figure 2, node A is said ingress node, and node F is said egress node. For a first path A-B-D-F nodes B and D are intermediate nodes, for a second path A-C-E-F nodes C and E are intermediate nodes, for a third path A-B-E-F nodes B and E are intermediate nodes, and for a fourth path A-C-D-F nodes C and D are intermediate nodes. Generally, nodes A, B and C are broadcasting nodes, due to parallelly sending set-up messages, and nodes D, E and F are deciding nodes, due to parallelly receiving set-up messages.

According to a second embodiment, switch 12 of system 1 shown in figure 1 is coupled to one or more of said nodes A-F shown in figure 2, with said nodes providing said quality codes to system 1 and/or information allowing said quality codes to be calculated by system 1, for example via unit 5 being a calculator, with system 1 being a broadcasting system and a deciding system.

In case of said quality code being an available bandwidth, when forwarding a set-up message (or sending a new one in response to the old one), the lowest of the received available bandwidth sofar and the coming and/or locally available bandwidth is to be chosen. This received available bandwidth is stored via the quality code in each set-up message, and the coming and/or locally available bandwidth is either known to a node (possibly via flooding) or is stored at another location known to said node. When deciding which path is to be chosen for setting up the connection, the highest of the available bandwidths is to be chosen, of course.

According to a first alternative, said quality code may be a delay, in which case when forwarding a set-up message (or sending a new one in response to the old one), the delays are to be added, per path. The received delay is stored via the quality code in each set-up message, and the coming and/or local delay is either known to a node (possibly via flooding) or is stored at another location known to said node. When deciding which path is to be chosen for setting up the connection, the lowest of the added delays is to be chosen, of course.

According to a second alternative, said quality code may be a number of hopcounts, in which case when forwarding a set-up message (or sending a new one in response to the old one), the hopcounts are to be added, per path. The received number of hopcounts is stored via the quality code in each set-up message, and the coming and/or local number of hopcounts is either known to a node (possibly via flooding) or is stored at another location known to said node or is just counted per node. When deciding which path is to be chosen for setting up the connection, the lowest of the added hopcounts is to be chosen, of course.

According to a third alternative, said quality code may be a packetloss, in which case when forwarding a set-up message (or sending a new one in response to the old one), the packetlosses are to be added, per path. The received packetloss is stored via the quality code in each set-up message, and the coming and/or local packetloss is either known to a node (possibly via flooding) or is stored at another location known to said node. When deciding which path is to be chosen for setting up the connection, the lowest of the added packetlosses is to be chosen, of course.

According to a fourth alternative, said quality code may be a function of one or more of said available bandwidths, delays, hopcounts and/or packetlosses, in which case when forwarding a set-up message (or sending a new one in response to the old one), the entire function is to be calculated, per path. When deciding which path is to be chosen for setting up the connection, the entire function is compared with an other function of an other path and/or with one or more thresholds, and/or parts of it are compared with parts of other functions of other paths and/or with several thresholds, etc.

According to a third embodiment, the system according to the invention and/or the broadcasting node according to the invention and/or the deciding node according to the invention comprise a timing function for, in case of a predefined time-interval being exceeded, generating a trigger signal for triggering for example said response sender 7 for sending a response message backward even if no response to one or more forward set-up messages has been received within said predefined time-interval. Unit 5 then comprises a timer coupled to said response sender 7 and to said set-up sender 6 and to said response receiver 11 and having said timing function for, in case of said predefined time-interval being exceeded, generating said trigger signal.

According to a fourth embodiment, one or more set-up messages comprise further codes like a time code defining said predefined time-interval and/or an elapsed part of said predefined time-interval and like a count code defining a number of set-up messages sent in parallel. One or more response messages can be either positive response messages and then comprise ingress codes, egress codes, quality codes and time codes or can be negative response messages and then comprise ingress codes and egress codes. Whether the response message is positive or negative may be indicated by the format and/or may be defined by a value of (a part of) the response code and/or a value of (a part of) the indication code.

Each embodiment and/or each alternative can be combined with each other embodiment and/or each other alternative. Each part of system 1, shown in the form of a block or not shown, can be 100% hardware, 100% software or a mixture of both. Therefore, a generator also comprises a generating function, a comparator also comprises a comparing function, and a selector also comprises a selecting function. Each block shown or not shown can be integrated with each other block shown and/or not shown per system 1, nodes A-F, but also per combinations of at least two of said system 1 and nodes A-F. In addition to the memory 3 shown, each block can have a further memory not shown for efficiency purposes.

Each bus may be replaced by separate connections, thereby for example introducing multiplexers and demultiplexers. Memory 3 can be for example a DPRAM, or a server controlled by processor 2 or a further processor not shown, or a combination of a memory and (de)multiplexer, etc. Comparator 9 may be for example a shift register, selector 8 can be for example a converter and/or have a converting function, or a table memory generating output values in response to input values, and generator 4 can be for example a converter and/or have a converting function, or a table memory generating output values in response to input values, etc. Switch 12 may comprise buffers not shown, and its own processor/memory not shown, and many more (electrical as well as optical) couplings for more complex networks as well as optical-electrical-converters and electrical-optical-converters. Said ingress node could be an ingress Label Switched Router (or a switch, a bridge, a server etc.) situated in a first (leaf) area, with said egress node being an egress Label Switched Router (or a switch, a bridge, a server etc.) situated in a second (leaf) area, and with a third (backbone) area being situated between said first area and said second area, and with said intermediate nodes being head-end Area Border Routers between said first area and said third area and/or tail-end Area Border Routers between said second area and said third area.

## Claims

1. System (1) for setting up a connection in a network from an ingress node (A) to an egress node (F), which system (1) comprises a set-up sender (6) for sending set-up messages comprising at least an ingress code, an egress code and a quality code and defining said connection to be set up and which system (1) comprises a set-up receiver (10) for receiving set-up messages, which system (1) further comprises a response sender (7) for sending response messages defining responses to said set-up messages and which system (1) further comprises a response receiver (11) for receiving response messages, **characterised in that** said system (1) comprises a set-up generator (4) coupled to said set-up sender (6) for generating at least a first set-up message and a second set-up message independently from any receival of response messages and defining said connection to be set up from said ingress node to said egress node, with said first set-up message using a first path and said second set-up message using a second path different from said first path, which system (1) further comprises a comparator (9) coupled to said set-up receiver (10) for comparing quality codes and which system (1) further comprises a selector (8) coupled to said comparator (9) for selecting a path in dependence of a comparison result, which response sender (7) is coupled to said selector (8) for sending said response messages in dependence of said selecting.

2. System (1) according to claim 1, **characterised in that** said first path connects said ingress node (A) with said egress node (F) via a first intermediate node (B,D), with said second path connecting said ingress node (A) with said egress node (F) via a second intermediate node (C,E) different from said first intermediate node (B,D).

3. System according to claim 2, **characterised in that** said ingress node (A) is an ingress Label Switched Router situated in a first area, with said egress node (F) being an egress Label Switched Router situated in a second area, and with a third area being situated between said first area and said second area, and with said intermediate nodes (B,C,D,E) being head-end Area Border Routers between said first area and said third area and/or tail-end Area Border Routers between said second area and said third area.

4. Network comprising ingress nodes, intermediate nodes and egress nodes for setting up a connection in said network from an ingress node (A) to an egress node (F), with at least a first node comprising a set-up sender (6) for sending set-up messages comprising at least an ingress code, an egress code and a quality code and defining said connection to be set up and with at least a second node comprising a set-up receiver (10) for receiving set-up messages, with said second node further comprising a response sender (7) for sending response messages defining responses to said set-up messages and with said first node further comprising a response receiver (11) for receiving response messages, **characterised in that** said first node corresponds with a broadcasting node (A,B,C) and further comprises a set-up generator (4) coupled to said set-up sender (6) for generating at least a first set-up message and a second set-up message independently from any receival of response messages and defining said connection to be set up from said ingress node (A) to said egress node (F), with said first set-up message using a first path and said second set-up message using a second path different from said first path, with said second node corresponding with a deciding node (D,E,F) and further comprising a comparator (9) coupled to said set-up receiver (10) for comparing quality codes and with said second node further comprising a selector (8) coupled to said comparator (9) for selecting a path in dependence of a comparison result, which response sender (7) is coupled to said selector (8) for sending said response messages in dependence of said selecting.

5. Network according to claim 4, **characterised in that** said first path connects said ingress node (A) with said egress node (F) via a first intermediate node (B,D), with said second path connecting said ingress node (A) with said egress node (F) via a second intermediate node (C,E) different from said first intermediate node (B), with at least one of said ingress node (A), egress node (F), first intermediate node (B,D) and second intermediate node (C,E) comprising at least one broadcasting node (A,B,C) and with at least one of said ingress node (A), egress node (F), first intermediate node (B,D) and second intermediate node (C,E) comprising at least one deciding node (D,E,F).

6. Broadcasting node (A,B,C) for use in a network comprising ingress nodes, intermediate nodes and egress nodes for setting up a connection in said network from an ingress node (A) to an egress node (F), with at least a first node comprising a set-up sender (6) for sending set-up messages comprising at least an ingress code, an egress code and a quality code and defining said connection to be set up and with said first node further comprising a response receiver (11) for receiving response messages, **characterised in that** said first node corresponds with said broadcasting node (A,B,C) and further comprises a set-up generator (4) coupled to said set-up sender (6) for generating at least a first set-up message and a second set-up message independently from any receival of response messages and defining said connection to be set up from said ingress node (A) to said egress node (F), with said first set-up message using a first path and said second set-up message using a second path different from said first path.

7. Broadcasting node (A,B,C) according to claim 6, **characterised in that** said first path connects said ingress node (A) with said egress node (F) via a first intermediate node (B,D), with said second path connecting said ingress node (A) with said egress node (F) via a second intermediate node (C,E) different from said first intermediate node (B,D), with at least one of said ingress node (A), egress node (F), first intermediate node (B,D) and second intermediate node (C,E) comprising at least one broadcasting node (A,B,C), with said ingress node (A) being an ingress Label Switched Router situated in a first area, with said egress node (F) being an egress Label Switched Router situated in a second area, and with a third area being situated between said first area and said second area, and with said intermediate nodes (B,C,D,E) being head-end Area Border Routers between said first area and said third area and/or tail-end Area Border Routers between said second area and said third area.

8. Deciding node (D,E,F) for use in a network comprising ingress nodes, intermediate nodes and egress nodes for setting up a connection in said network from an ingress node (A) to an egress node (F), with at least a second node comprising a set-up receiver (10) for receiving set-up messages comprising at least an ingress code, an egress code and a quality code and defining said connection to be set up, with said second node further comprising a response sender (7) for sending response messages defining responses to said set-up messages, **characterised in that** said second node corresponds with a deciding node (D,E,F) and further comprises a comparator (9) coupled to said set-up receiver (10) for comparing quality codes originating from at least a first set-up message defining a first path and a second set-up message defining a second path different from said first path, with said second node further comprising a selector (8) coupled to said comparator (9) for selecting a path in dependence of a comparison result, which response sender (7) is coupled to said selector (8) for sending said response messages in dependence of said selecting.

9. Deciding node (D,E,F) according to claim 8, **characterised in that** said first path connects said ingress node (A) with said egress node (F) via a first intermediate node (B,D), with said second path connecting said ingress node (A) with said egress node (F) via a second intermediate node (C,E) different from said first intermediate node (B), with at least one of said ingress node (A), egress node (F), first intermediate node (B,D) and second intermediate node (C,E) comprising at least one deciding node (D,E,F), with said ingress node (A) being an ingress Label Switched Router situated in a first area, with said egress node (F) being an egress Label Switched Router situated in a second area, and with a third area being situated between said first area and said second area, and with said intermediate nodes (B,C,D,E) being head-end Area Border Routers between said first area and said third area and/or tail-end Area Border Routers between said second area and said third area.

10. Method for setting up a connection from an ingress node to an egress node in a network comprising ingress nodes, intermediate nodes and egress nodes, which method comprises a first step of at a first node sending set-up messages comprising at least an ingress code, an egress code and a quality code and defining said connection to be set up and a second step of at a second node receiving set-up messages and a third step of at said second node sending response messages defining responses to said set-up messages and a fourth step of at said first node receiving response messages, **characterised in that** said method comprises a fifth step of at said first node which corresponds with a broadcasting node generating at least a first set-up message and a second set-up message independently from any receival of response messages and defining said connection to be set up from said ingress node to said egress node, with said first set-up message using a first path and said second set-up message using a second path different from said first path and a sixth step of at said second node which corresponds with a deciding node comparing quality codes and a seventh step of at said second node selecting a path in dependence of a comparison result, with said sending of said response messages being dependent upon said selecting.
